Europäisches Patentamt

European Patent Office

Office européen des brevets

(11) Publication number: **0 112 626**
A2

# EUROPEAN PATENT APPLICATION

(21) Application number: 83306658.2

(51) Int. Cl.³: **H 04 N 7/00**

(22) Date of filing: 02.11.83

(30) Priority: 21.12.82 GB 8236284

(43) Date of publication of application: 04.07.84
Bulletin 84/27

(84) Designated Contracting States: AT BE CH DE FR GB IT
LI LU NL SE

(71) Applicant: THORN EMI Ferguson Limited, Thorn Emi
House Upper Saint Martin's Lane, London, WC2H 9ED
(GB)

(72) Inventor: Bashour, Jad, 216, Westbury Avenue, London,
N22 (GB)

(74) Representative: Fleming, Ian Alexander et al, THORN
EMI Patents Limited The Quadrangle Westmount Centre
Uxbridge Road, Hayes Middlesex, UB4 0HB (GB)

(54) Television link.

(57) An installation links a large colour television receiver 1
(with Teletext facilities) to a portable black-and-white television receiver 2 (without Teletext facilities) in such a way that
the Teletext output can be displayed on the receiver 2
thereby not interrupting the programme on receiver 1; this
link is achieved by utilizing pulsed laser light for transmit-
ting the Teletext information.

Connection extends between the output of the Teletext
decoder in receiver 1 and a separate digital encoder 3 so
that the video signals emerging from the Teletext decoder
can be switched from display on receiver 1. The suitably encoded video signals then pass to a laser transmitter 4 which
transforms them to a pulsed laser beam which is trans-
mitted initially along an optical fibre 5 and subsequently
along a line-of-sight path in air to a receiver 6 incorporating
an analogue amplifier. Thereafter the signal is passed to a
decoder 7 which converts the signals back into a form suitable for display on receiver 2.

: 1 :

## TELEVISION LINK

The present invention relates to an installation for linking televisions.

A known installation comprises a first television set, a second television set and means to transfer video signals from the first television set to the second television set.

The present invention is characterised by the transfer means incorporating a section in which the video signals are transmitted optically over at least a substantial portion of the path separating the television sets.

Thus information derived from the first television set can be displayed on the second television set with a minimum of radio frequency interference occurring.

In one form the invention provides an installation comprising a first television set having coding means to process received signals into signals for display on a television set. The processing means may be, for example, a viewdata decoder, or a Teletext decoder, or a video games terminal or a personal computer decoder, so that such facilities can be added to a second television set by linking it to the decoder of the first television set. Thus, for example, a teenager can look through

0112626

the Teletext entertainment guide on the portable television set (itself not having a Teletext decoder) without disturbing the rest of the family who are watching a broadcast program on the main colour television set which does have Teletext facilities.

In one advantageous form the invention provides an electrical installation comprising a first television set, means to convert signals received, in use, at the first television set into optical signals for transmission, means to reconvert transmitted optical signals and a second television set for displaying those signals from the reconversion means.

Preferably, the optical signals are in the form of pulsed coherent light, although as an alternative incoherent light can be used. The optical signals can be transmitted through air, through optical fibre(s) or along a path which includes a part or parts through air and a part or parts through optical fibre(s).

Signals, e.g. for control of the teletext facilities, can be returned to the first television set in the same way as the video signals are passed to the second set. For example, the control signal may be sent along an optical fibre adjacent to (e.g. in the same optical cable as) that optical fibre along which the converted video signals are sent.

Each of the television sets may be a television receiver. In a different embodiment, the first television set is a television receiver and the second television set is a monitor i.e. it has a cathode ray tube and associated control circuits operable by video signals fed to it but it has no aerial or tuner.

In order that the invention may more readily be understood a description is now given, by way of example only reference being made to the accompanying drawings in which:-

Figure 1 is a schematic illustration of an electrical installation emboding the present invention;

Figure 2 is a block diagram of an encoder in the installation of Figure 1;

Figure 3 is a detailed circuit diagram of part of the encoder of Figure 2;

Figures 4(a) to 4(c) are timing charts concerning the encoder of Figure 2;

Figure 5 is a circuit diagram of the laser transmitter and part of the encoder;

Figure 6 is a diagram of a monostable circuit in the encoder of Figure 5;

Figure 7 is a circuit diagram of the laser beam receiver and analogue amplifier;

Figure 8 is a schematic diagram of the decoder of Figure 1; and

Figure 9 is a circuit diagram of the decoder in Figure 8.

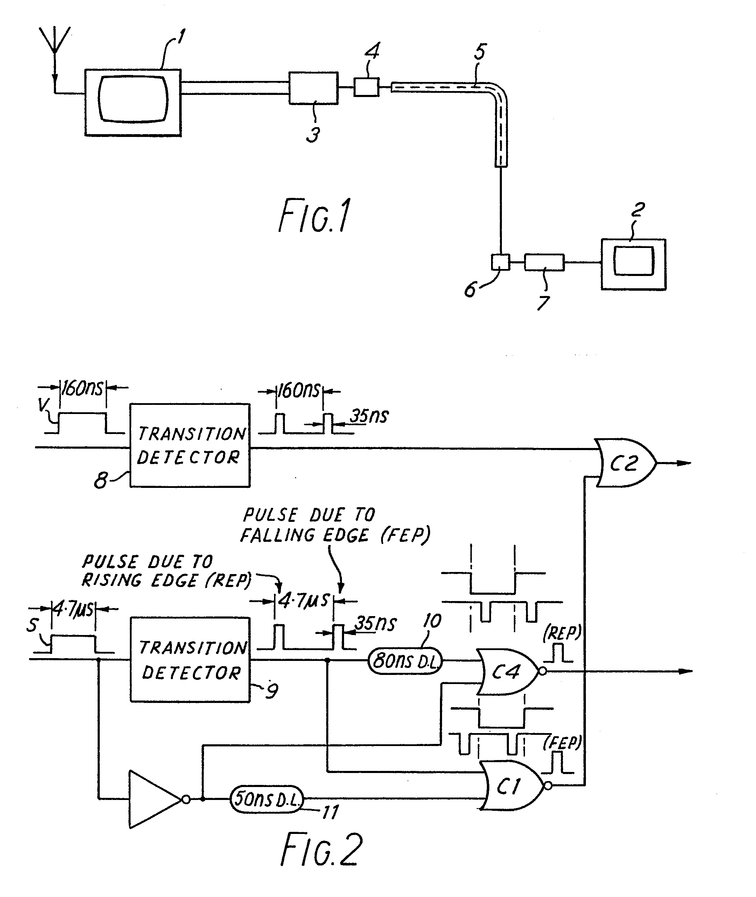

The electrical installation illustrated in Figure 1 links a large colour television receiver 1 (with Teletext facilities) to a portable black-and-white television receiver 2 (without Teletext facilities) in such a way that the Teletext output can be displayed on the receiver 2 thereby not interrupting the programme on receiver 1; this link is achieved by utilizing pulsed laser light for transmitting the Teletext information.

More specifically, connection extends between the output of the Teletext decoder in receiver 1 and a separate digital encoder 3 so that the video signals emerging from the Teletext decoder can be switched from display on receiver 1.　The suitably encoded video signals then pass to a laser transmitter 4 which transforms them to a pulsed laser beam which is then transmitted initially along an optical fibre 5 and subsequently along a line-of-sight path in air to a receiver 6 incorporating an analogue amplifier.　Thereafter the signal is passed to a decoder 7 which converts the signals back into a form suitable for display on receiver 2.

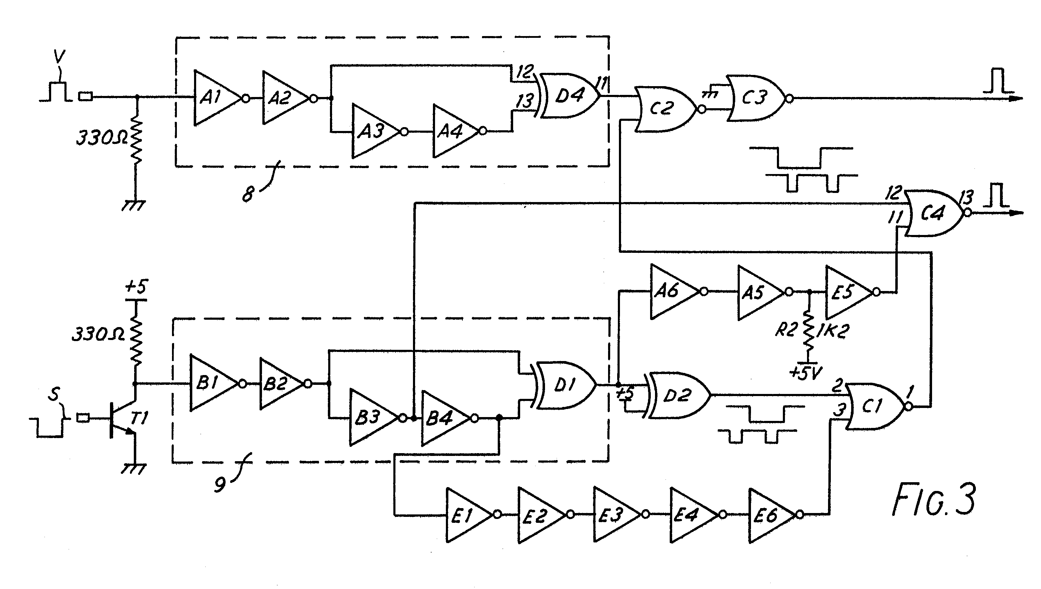

Taking each of the major components of the installation in turn, firstly the encoder is illustrated schematically in Figure 2, while Figure 3 shows an appropriate detailed circuit diagram.　Pulses from this encoder represent transitions of the data edges of the input video signals, i.e. the rising edge of the composite sync data is represented by a pulse which is wider than any other pulse in the serial stream (thereby enabling subsequent recognition and recovery by separation of the data from the sync). To achieve this, the video signal (V), which consists of variable width pulses ranging from 160 ns to about $50 \mu$ s, is fed to a transition detector 8 in which a narrow pulse of 35 ns is generated for every transition $A_1$ and $A_2$ act as pulse shapers. Thereafter the video signal V passes on to a frequency doubler at which one of the input signals to the EX-OR gate D4 is delayed to generate the 35 ns transition pulses. The video signal V is now ready for mixing with the encoder sync signal.

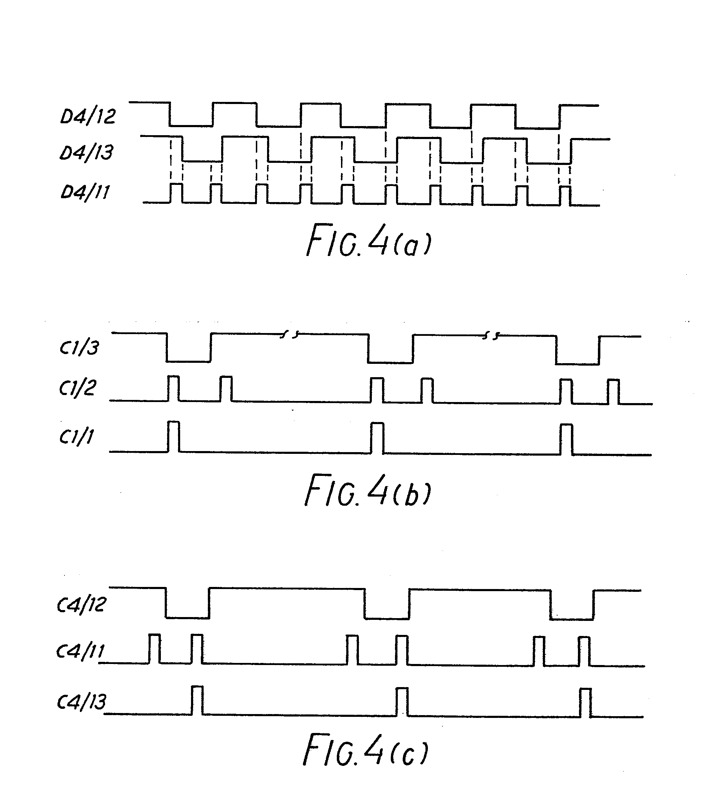

The relative waveforms of the signals at each of pins 11, 12 and 13 of gate D4 are shown in Figure 4(a).

To encode the sync signals (S), they are likewise processed by a transition detector 9. Thus they are first passed through $T_1$ which provides TTL interfacing and then processed by $B_1$ and $B_2$ (acting as pulse shapers) and $B_3$, $B_4$ and $D_1$, to obtain 35 ns transition pulses as for the video signal V. However this time the signal is further processed by two delay lines (10, 11) and NOR gates in order to separate the pulses due to rising sync transitions from these due to falling sync transitions. Then these pulses due to rising transitions are fed to a monostable and pulse stretched to about 80 ns, the two OR gates $C_2$ and $C_3$ then combining the video data signals V and the resultant sync signals S to produce a time multiplexed serial data stream ready for transmission.

Components A5, A6 and E5 (see Figure 3) are included in one of the input paths to gate C4 to provide a relative delay between inputs of 80 nsec; likewise components E1 to E6 provide a relative delay of 50 nsec between inputs to gate C1.

The relative waveforms of the signals at each of pins 1, 2 and 3 of gate $C_1$ are shown in Figure 4(b). The transition pulse due to the sync pulse front edge is separated from the pulse due to the trailing edge by sufficiently delaying the signal arriving at pin 2 such that only the required pulse is gated through.

The relative waveforms of the signals at each of pins 11, 12 and 13 of gate $C_4$ are shown in Figure 4(c). The pulse due to the sync back edge is separated from that of the front one by suitable delay of the signal from detector 9.

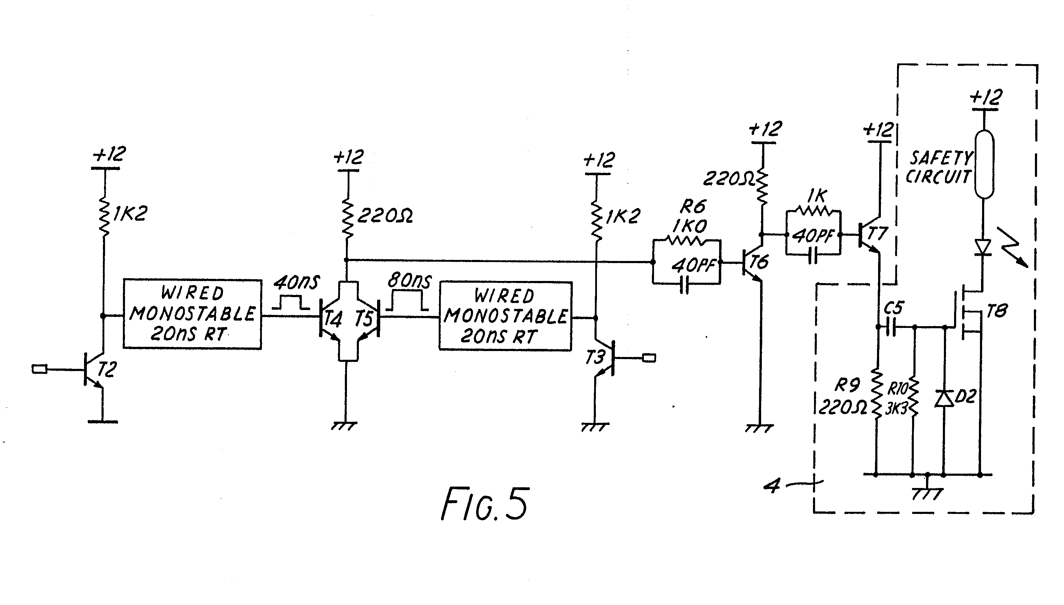

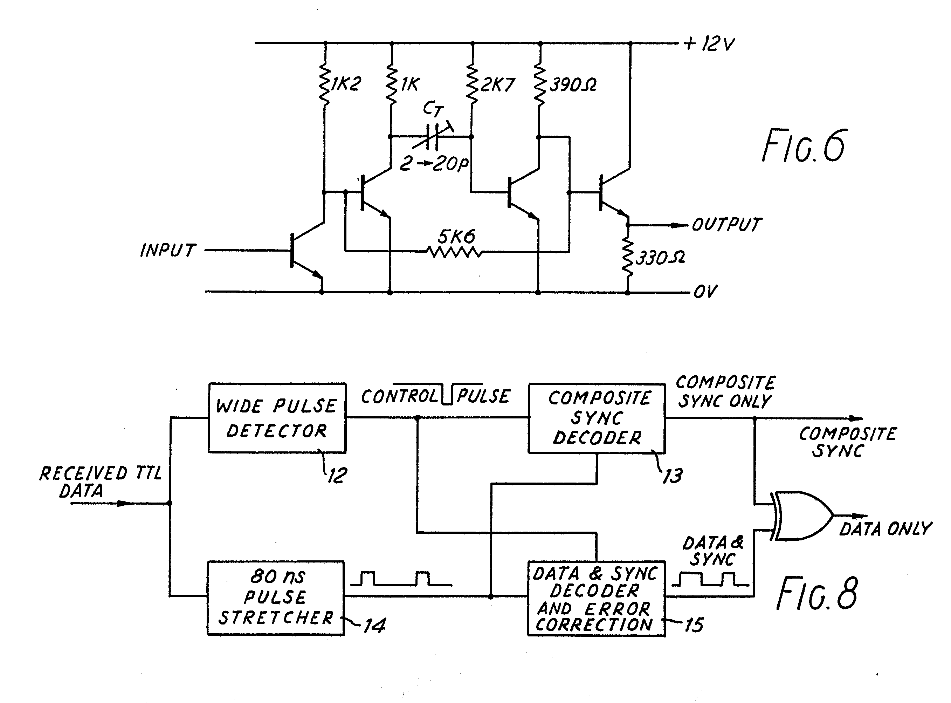

The encoded video signals V, the sync back edge signals and the sync front edge signals are then all fed to transistors $T_2$ and $T_3$ (see Figure 5) to provide respectively simplification and change of polarity. Output signals from $T_2$ and $T_3$ are fed to two fast monostable circuits (details are shown in Figure 6, suitable adjustment of $T_1$ providing the appropriate pulse width), one generating a wide pulses of 80 ns for sync front edges and the other generating narrow pulses of 40 ns for video signals V and for sync back edges. The output signals from these two monostable circuits then pass to an OR gate in order to reinsert the sync front edge pules in the serial data stream, and then transistor $T_6$ effects a change of polarity and transistor $T_7$ acts as a buffer.

The resultant composite signal is passed to laser transmitter 4 which has a capacitor $C_5$ to block D.C. current and a Vmos transistor $T_8$ which drives a double heterostructured laser diode to provide an appropriately pulsed optical beam.

To prevent the laser diode operating at 100% duty cycle (caused e.g. by the FET shorting out), a safety mechanism is included in the output stage of the transmitter such that in these circumstances the driving current for the laser is limited.

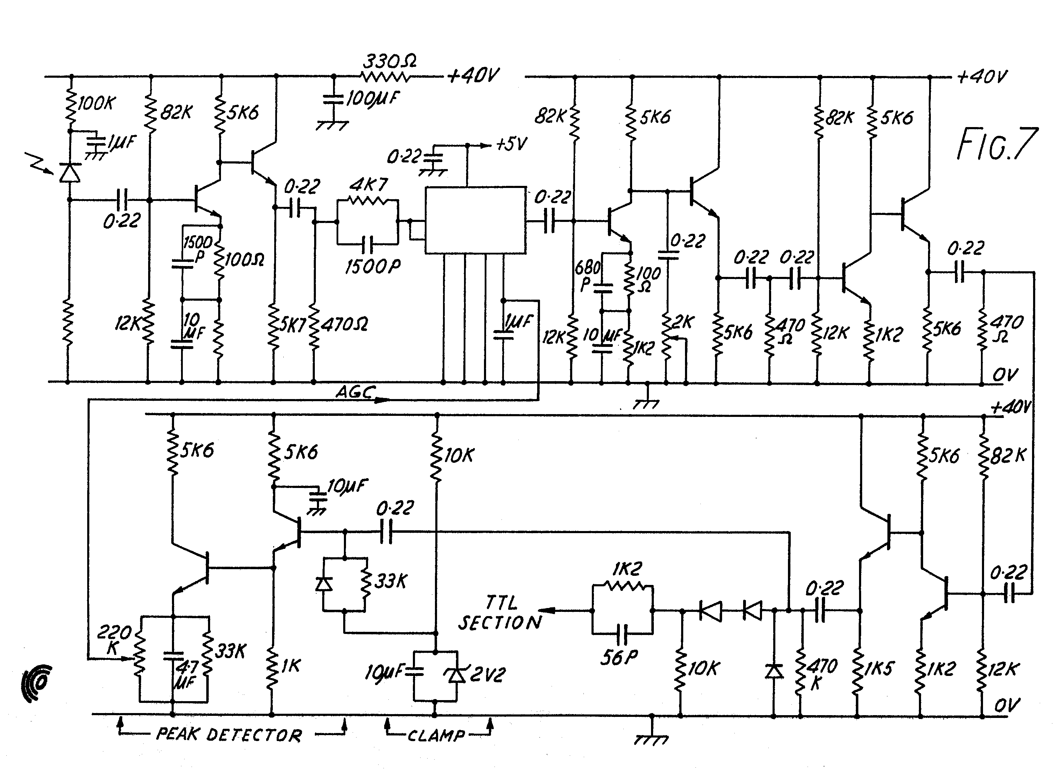

The laser beam receiver 6 includes a light sensitive diode connected to a low noise analogue amplifier with a gain of 15000 and a bandwidth of 10 M Hz, the high pass filter cut-off frequency being about 10 KHz. The amplifier is able to process optical beams of path lengths in the range between 0.5 metres and 10 metres. Details of the receiver and analogue amplifier

: 6 :    0112626

circuits are shown in Figure 7.

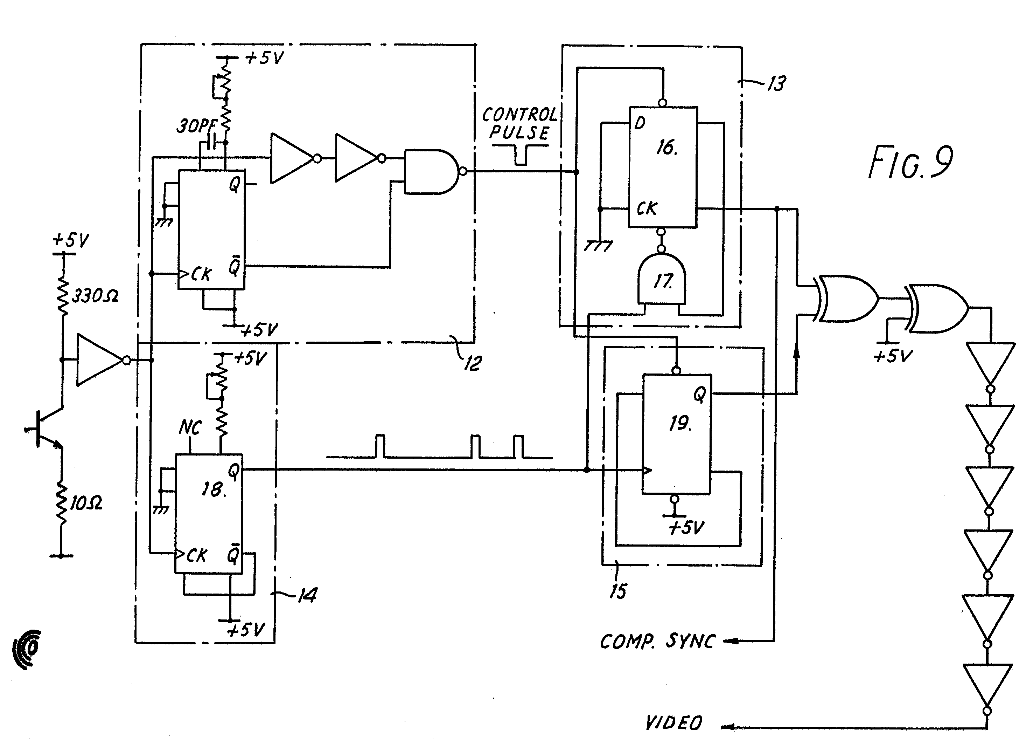

The decoder 7 is shown schematically in Figure 8.   A wide pulse generator 12 produces a narrow control pulse each time a wide pulse passes, but ignores any other pulse;   this is achieved by the detector comparing any pulse it receives with a self-generated fixed-width pulse and only taking action if the latter is exceeded.   The sync decoder 13 considers that each control pulse reaching it is a rising edge of a sync pulse (disregarding whether it is a line, field or equalising pulse) and recognises that the next pulse from pulse stretcher 14 corresponds to the falling edge;   hence the sync pulses can be reconstituted and separated.

Thus this decoder includes logic device 16 and gate 17 such that when the control pulse appears, it forces Q of 16 to go high, so that it opens the gate 17 for the next pulse coming from logic device 18 and consequently forces Q of device 16 to "flip" low, signalling the end of the pulse, i.e. the control pulse signals the beginning of a sync pulse and the following pulse signals the end of it.   This operation will be repeated only when the control pulse appears again i.e. on the next sync pulse.

Decoder 19 incorporates automatic error correction every line, such that the occurrence of an unintended peak in the composite signals affects only that line and not successive ones.   Thus the encoded data and sync is fed to the clock input of decoder 19 (a resettable divide-by-two RS flip-flop), any unintended peaks causing inversion of the signal.   However, as the control pulse is fed to pin 1 of decoder 19, the Q output is in a known state (high) at the start of each new line (signified by the control pulse) thereby nullifying the effect of any error which had occurred in previous line.

Composite sync and composite video are summed up at the exclusive "OR" $E_1$ to produce video only at the output.   Video is then delayed by about 80ns as raster adjustment.

The composite sync and the video are then summed up in the

: 7 :

0112626

correct polarity using a standard network to produce negative
sync composite video.

The output from this network is then fed to a UHF modulator
the output of which is fed to the aerial socket of the remote
television 2.

0112626

## CLAIMS

1.    An installation comprising a first television set (1), a second television set (2) and means (3 to 7) to transfer video signals from the first television set to the second television set, characterised by the transfer means incorporating a section (5) in which the video signals are transmitted optically over at least a substantial portion of the path separating the television sets.

2.    An installation according to Claim 1, characterised by means (3) to convert signals received, in use, at the first television set into optical signals for transmission, and by means (7) to reconvert transmitted optical signals into electrical signals.

3.    An installation according to Claim 1 or Claim 2, characterised by the first television set having coding means (3) to process received signals into signals for display on a television set.

4.    An installation according to any one of the preceding claims, characterised by means to transmit signals from the second television set to the first television set.

5.    An installation according to Claim 4, characterised by the transmission means from the second television set to the first television set incorporating a section in which the video signals are transmitted optically.

FIG.1

PULSE DUE TO
FALLING EDGE (FEP)

PULSE DUE TO
RISING EDGE (REP)

FIG.2

FIG.3

2/7

0112626

FIG. 4(a)

FIG. 4(b)

FIG. 4(c)

FIG.5

FIG.6

FIG.8

FIG.7

PEAK DETECTOR   CLAMP   TTL SECTION

6/7

0112626

FIG.9